# EUROPEAN PATENT APPLICATION

(11) **EP 4 675 848 A1**
(43) Date of publication of application: **07.01.2026**
(21) Application number: 24829872.1
(22) Date of filing: 26.02.2024
(51) Int. Cl.: H01Q 1/22

(54) **ELECTRONIC DEVICE**

(30) Priority: 25.06.2023 CN 202310756770
(71) Applicant: Honor Device Co., Ltd., Shenzhen, Guangdong 518040 (CN)
(72) Inventor: WANG, Yu, Shenzhen, Guangdong 518040 (CN); HU, Wenlong, Shenzhen, Guangdong 518040 (CN); LV, Yan, Shenzhen, Guangdong 518040 (CN); ZHAO, Yawei, Shenzhen, Guangdong 518040 (CN)
(74) Representative: Goddar, Heinz J.
(86) International application number: PCT/CN2024/078603
(87) International publication number: WO 2025/001215

(57) **Abstract**

Embodiments of this application provide an electronic device. The electronic device includes a middle frame, a display screen, a back cover, and a reinforcement body. The middle frame includes at least one bezel. The bezel includes a first radiator and a second radiator. Adjacent end portions of the first radiator and the second radiator are spaced apart to form an antenna gap. The first radiator includes a first conductive support leg, and the second radiator includes a second conductive support leg. In a thickness direction of the middle frame, the display screen and the back cover are disposed on two opposite sides of the middle frame. The reinforcement body is located between the display screen and the back cover. Both the first conductive support leg and the second conductive support leg are spaced from the reinforcement body, and the reinforcement body is disposed opposite to the antenna gap. In the thickness direction of the middle frame, at least one of the first conductive support leg and the second conductive support leg is located on one side that is of the reinforcement body and that faces away from the display screen.

## Description

This application claims priority to Chinese Patent Application No. 202310756770.8, filed with the China National Intellectual Property Administration on June 25, 2023 and entitled "ELECTRONIC DEVICE", which is incorporated herein by reference in its entirety.

### TECHNICAL FIELD

Embodiments of this application relate to the field of terminal technologies, and in particular, to an electronic device.

### BACKGROUND

With explosive growth of electronic devices such as smartphones or tablet computers, the electronic devices have more functions. Different electronic components, such as a central processing unit (central processing unit, CPU), an intelligent algorithm chip, a power management integrated circuit (power management IC, PMIC), or an antenna, are integrated inside a housing of an electronic device. An antenna is an apparatus configured to receive or transmit electromagnetic wave signals in the electronic device. With continuous development and iteration of mobile communication technologies, a communication requirement required by the electronic device is increasingly high. In a related technology, a structure design of the electronic device is increasingly compact and lightweight. However, more frequency bands and more types are required to be covered by the antenna of the electronic device. The electronic device includes a middle frame. The middle frame includes at least one bezel. A manner of providing an antenna gap on the bezel to form a plurality of antenna radiators can help meet a design requirement of the antenna radiators. However, the antenna radiators formed by providing the antenna gap on the bezel have relatively reduced antenna performance.

### SUMMARY

Embodiments of this application provide an electronic device, to enhance structural strength at a position on a bezel where an antenna gap is provided, and may ensure that a radiator has good antenna performance.

According to a first aspect of this application, an electronic device is provided. The electronic device includes a middle frame, a display screen, a back cover, and a reinforcement body.

The middle frame includes at least one bezel. The bezel includes a first radiator and a second radiator. Adjacent end portions of the first radiator and the second radiator are spaced apart to form an antenna gap. The first radiator includes a first conductive support leg, and the second radiator includes a second conductive support leg. In a thickness direction of the middle frame, the display screen and the back cover are disposed on two opposite sides of the middle frame. The reinforcement body is located between the display screen and the back cover. Both the first conductive support leg and the second conductive support leg are spaced from the reinforcement body, and the reinforcement body is disposed opposite to the antenna gap. In the thickness direction of the middle frame, at least one of the first conductive support leg and the second conductive support leg is located on one side that is of the reinforcement body and that faces away from the display screen.

In the electronic device in this embodiment of this application, the reinforcement body is correspondingly disposed at the antenna gap of the bezel, to enhance, by using the reinforcement body, structural strength at a position on the bezel where the antenna gap is provided. This reduces a possibility that a bearing capacity of the bezel is reduced and that the bezel is easy to be deformed due to a decrease in the structural strength of the bezel. In addition, the at least one of the first conductive support leg and the second conductive support leg is located on one side that is of the reinforcement body that faces away from the display screen. A distance between the at least one of the first conductive support leg and the second conductive support leg and the display screen is large. This helps increase a clearance of the at least one of the first conductive support leg and the second conductive support leg in narrow space, to help improve antenna performance of at least one of the first radiator and the second radiator. Therefore, in narrow space inside the electronic device, the reinforcement body, the first conductive support leg, and the second conductive support leg may be disposed at the same time, to reduce a possibility that the first radiator or the second radiator has relatively reduced antenna performance due to a small clearance of the first conductive support leg or the second conductive support leg while improving the structural strength at the position on the bezel where the antenna gap is provided. This ensures that the at least one of the first radiator and the second radiator has good antenna performance.

In a possible implementation, in the thickness direction of the middle frame, both the first conductive support leg and the second conductive support leg are located on one side that is of the reinforcement body and that faces away from the display screen.

A distance between each of the first conductive support leg and the second conductive support leg and the display screen is large. This helps increase both clearances of the first conductive support leg and the second conductive support leg in the narrow space, to help improve antenna performance of the first radiator and the second radiator. Therefore, in the narrow space inside the electronic device, the reinforcement body, the first conductive support leg, and the second conductive support leg may be disposed at the same time, to reduce the possibility that the first radiator and the second radiator have relatively reduced antenna performance due to small clearances of the first conductive support leg and the second conductive support leg while improving the structural strength at the position on the bezel where the antenna gap is provided. This ensures that the first radiator and the second radiator have good antenna performance.

In a possible implementation, in the thickness direction of the middle frame, an orthographic projection of the at least one of the first conductive support leg and the second conductive support leg has an overlapping region with an orthographic projection of the reinforcement body.

The reinforcement body may fully use space on one side that is of the at least one of the first conductive support leg and the second conductive support leg and that faces the display screen, so that a structure design of the reinforcement body, the first conductive support leg, and the second conductive support leg is compact. This helps reduce a space occupancy rate of the reinforcement body, the first conductive support leg, and the second conductive support leg.

In a possible implementation, an orthographic projection of the first conductive support leg and an orthographic projection of the second conductive support leg each have an overlapping region with the orthographic projection of the reinforcement body.

The reinforcement body may fully use space on one side that is of the first conductive support leg and the second conductive support leg and that faces the display screen, so that the structure design of the reinforcement body, the first conductive support leg, and the second conductive support leg is compact. This helps reduce the space occupancy rate of the reinforcement body, the first conductive support leg, and the second conductive support leg.

In a possible implementation, the at least one of the first conductive support leg and the second conductive support leg is provided with a profiled surface facing the back cover. A shape of the profiled surface is the same as a shape of an inner wall of the back cover. There is a gap between the profiled surface and the inner wall.

There is the gap between the profiled surface and the inner wall. This prevents position interference from occurring between the first conductive support leg or the second conductive support leg and the back cover, and at the same time, may also prevent a case in which the back cover collapses under external pressing to cause squeezing on the first conductive support leg or the second conductive support leg.

In a possible implementation, the electronic device further includes an insulating filler. The insulating filler connects the reinforcement body and the bezel. The display screen includes a flexible connection circuit board with a bending portion. The flexible connection circuit board is located on one side that is of the reinforcement body and that is far away from the back cover. A surface that is of the insulating filler and that faces the flexible connection circuit board is provided with an avoidance recess. The avoidance recess is configured to avoid the bending portion, to prevent a case in which the bending portion is squeezed by the insulating filler and is damaged.

The insulating filler may connect the bezel and the reinforcement body into a whole, so that the bezel, the reinforcement body, and the insulating filler may form a combination. This may help further improve the structural strength at the position on the bezel where the antenna gap is provided, and improve an impact resistance capability of the bezel.

In a possible implementation, the reinforcement body is embedded in the insulating filler. At least a part of a surface that is of the reinforcement body and that faces the flexible connection circuit board forms a bottom wall of the avoidance recess. The reinforcement body may avoid the bending portion, and the reinforcement body is relatively far away from the bending portion, to prevent a case in which the bending portion is squeezed by the reinforcement body and is damaged.

In a possible implementation, a distance between the reinforcement body and the first conductive support leg is 0.5 millimeters or more.

A large distance may be maintained between the reinforcement body and the first conductive support leg. This may help reduce a possibility that the reinforcement body has adverse effect on an electromagnetic wave signal received or transmitted by the first conductive support leg.

In a possible implementation, a distance between the reinforcement body and the second conductive support leg is 0.5 millimeters or more. A large distance may be maintained between the reinforcement body and the second conductive support leg. This may help reduce adverse effect of the reinforcement body on an electromagnetic wave signal received or transmitted by the second conductive support leg.

In a possible implementation, the electronic device further includes a conductive connector. One of the first conductive support leg and the second conductive support leg is electrically connected to the reinforcement body through the conductive connector.

For a manner in which the reinforcement body is electrically connected to the first conductive support leg, or the reinforcement body is electrically connected to the second conductive support leg, the reinforcement body helps enhance gap coupling strength between the first radiator and the second radiator, to improve coupling electric field strength between the first radiator and the second radiator, so as to help improve antenna performance. In addition, the reinforcement body is connected to the first conductive support leg, or the reinforcement body is connected to the second conductive support leg. This helps improve connection strength and connection stability between the reinforcement body and the first radiator or between the reinforcement body and the second radiator, to help improve structural strength of the combination formed by the reinforcement body, the insulating filler, and the bezel.

In a possible implementation, the reinforcement body, the conductive connector, and one of the first conductive support leg and the second conductive support leg are of an integrally formed structure. This helps increase structural strength of the reinforcement body, the conductive connector, and one of the first conductive support leg and the second conductive support leg, and further helps improve structural strength of a combination formed by the reinforcement body, the insulating filler, and the middle frame.

In a possible implementation, the conductive connector is a solder bump. One of the first conductive support leg and the second conductive support leg is soldered to the reinforcement body. This helps reduce processing difficulty and costs.

In a possible implementation, in the thickness direction of the middle frame, one of the first conductive support leg and the second conductive support leg is located on one side that is of the reinforcement body and that faces away from the display screen, and the other one of the first conductive support leg and the second conductive support leg is located on one side that is of the reinforcement body and that faces the display screen.

A distance between the first conductive support leg or the second conductive support leg located on one side that is of the reinforcement body and that faces away from the display screen and the display screen is large. This helps increase the clearance of the first conductive support leg or the second conductive support leg in the narrow space, to help improve the antenna performance of the first radiator or the second radiator.

In a possible implementation, the reinforcement body is spaced from the middle frame.

A large distance may be maintained between the reinforcement body and the first radiator and between the reinforcement body and the second radiator. This may reduce a possibility that the reinforcement body has adverse effect on an electromagnetic wave signal received or transmitted by the first radiator and the second radiator.

In a possible implementation, in a length direction of the bezel, the first radiator is spaced from the second radiator.

According to a second aspect of this application, an electronic device is provided. The electronic device includes a middle frame, a display screen, a back cover, a reinforcement body, and a conductive connector.

The middle frame includes at least one bezel. The bezel includes a first radiator and a second radiator. Adjacent end portions of the first radiator and the second radiator are spaced apart to form an antenna gap. The first radiator includes a first conductive support leg, and the second radiator includes a second conductive support leg. In a thickness direction of the middle frame, the display screen and the back cover are disposed on two opposite sides of the middle frame. The reinforcement body is located between the display screen and the back cover. Both the first conductive support leg and the second conductive support leg are spaced from the reinforcement body, and the reinforcement body is disposed opposite to the antenna gap. Both the first conductive support leg and the second conductive support leg are spaced from the reinforcement body. One of the first conductive support leg and the second conductive support leg is electrically connected to the reinforcement body through the conductive connector.

For a manner in which the reinforcement body is electrically connected to the first conductive support leg, or the reinforcement body is electrically connected to the second conductive support leg, the reinforcement body helps enhance gap coupling strength between the first radiator and the second radiator, to improve coupling electric field strength between the first radiator and the second radiator, so as to help improve antenna performance. In addition, the reinforcement body is connected to the first conductive support leg, or the reinforcement body is connected to the second conductive support leg. This helps improve connection strength and connection stability between the reinforcement body and the first radiator or between the reinforcement body and the second radiator, to help improve structural strength of a combination formed by the reinforcement body, the insulating filler, and the bezel.

In a possible implementation, in the thickness direction of the middle frame, both the first conductive support leg and the second conductive support leg are located on one side that is of the reinforcement body and that faces the display screen.

In a possible implementation, the reinforcement body, the conductive connector, and one of the first conductive support leg and the second conductive support leg are of an integrally formed structure. This helps increase structural strength of the reinforcement body, the conductive connector, and one of the first conductive support leg and the second conductive support leg, and further helps improve structural strength of a combination formed by the reinforcement body, the insulating filler, and the middle frame.

In a possible implementation, the conductive connector is a solder bump. One of the first conductive support leg and the second conductive support leg is soldered to the reinforcement body. This helps reduce processing difficulty and costs.

In a possible implementation, in the thickness direction of the middle frame, an orthographic projection of at least one of the first conductive support leg and the second conductive support leg has an overlapping region with an orthographic projection of the reinforcement body.

The reinforcement body may fully use space on one side of the at least one of the first conductive support leg and the second conductive support leg, so that a structure design of the reinforcement body, the first conductive support leg, and the second conductive support leg is compact. This helps reduce a space occupancy rate of the reinforcement body, the first conductive support leg, and the second conductive support leg.

In a possible implementation, in the thickness direction of the middle frame, the orthographic projection of the reinforcement body is rectangular, so that a shape of the reinforcement body is relatively regular. This helps reduce processing difficulty.

In a possible implementation, the electronic device further includes an insulating filler. The insulating filler connects the reinforcement body and the bezel. The reinforcement body includes a first recess. An opening of the first recess faces the antenna gap, so that a middle part of the reinforcement body is relatively far away from the bezel, and a large quantity of insulating fillers may be accommodated between the reinforcement body and the bezel. This helps improve connection strength between the reinforcement body, the bezel, and the insulating filler, to improve the structural strength of the combination formed by the reinforcement body, the insulating filler, and the bezel. Alternatively, an opening of the first recess faces away from the antenna gap, so that a middle part of the reinforcement body is relatively far away from the main board, and position interference is not likely to be formed between the middle part of the reinforcement body and the main board, to prevent a size of the main board from being reduced due to a need to avoid the middle part of the reinforcement body. The insulating filler covers the first recess. The insulating filler has a first convex portion that matches a shape of the first recess, to help increase connection strength between the insulating filler and the reinforcement body and improve a bonding force between the insulating filler and the reinforcement body, so as to help improve the structural strength of the combination formed by the reinforcement body, the insulating filler, and the bezel.

In a possible implementation, the electronic device further includes the insulating filler. The insulating filler connects the reinforcement body and the bezel. The reinforcement body includes the first recess. The opening of the first recess faces the antenna gap. A bottom wall of the first recess is provided with a second recess. The insulating filler covers the first recess and the second recess. The insulating filler has a first convex portion that matches a shape of the first recess and a second convex portion that matches a shape of the second recess, to help further increase the connection strength between the insulating filler and the reinforcement body and improve the bonding force between the insulating filler and the reinforcement body, so as to help further improve the structural strength of the combination formed by the reinforcement body, the insulating filler, and the bezel.

In a possible implementation, the electronic device further includes the insulating filler. The insulating filler connects the reinforcement body and the bezel. An inner wall of at least one of the first radiator and the second radiator is provided with a third recess, the insulating filler covers the third recess, and the insulating filler has a third convex portion that matches a shape of the third recess, to help further increase the connection strength between the insulating filler and the reinforcement body and improve the bonding force between the insulating filler and the reinforcement body, so as to help further improve the structural strength of the combination formed by the reinforcement body, the insulating filler, and the bezel.

In a possible implementation, the reinforcement body is arc-shaped. A surface of the arc-shaped reinforcement body is smooth and flat, has a regular shape, and is easy to be processed and manufactured. In addition, when bearing stress, the reinforcement body has good force balance.

In a possible implementation, the reinforcement body includes a first reinforcement section and a second reinforcement section that are disposed in an intersecting manner.

The first reinforcement section and the second reinforcement section are separately embedded in the insulating filler at different angles, to help increase the connection strength between the insulating filler and the reinforcement body and improve the bonding force between the insulating filler and the reinforcement body.

In a possible implementation, the electronic device further includes a metal middle plate and a main board. In the thickness direction of the middle frame, the metal middle plate and the main board are located between the display screen and the back cover. Both the first radiator and the second radiator are electrically connected to the metal middle plate. The main board is disposed on the metal middle plate. The main board includes a ground terminal. The metal middle plate is electrically connected to the ground terminal.

In a manner in which the first radiator and the second radiator are grounded with the main board by using the metal middle plate, a grounding structural member may not need to be additionally disposed between the first radiator and the main board and between the second radiator and the main board. This helps reduce a quantity of used parts.

### BRIEF DESCRIPTION OF DRAWINGS

FIG. 1 is a diagram of a structure of an electronic device in an unfolded state according to an embodiment of this application;
FIG. 2 is a diagram of a structure of an electronic device in a semi-folded state according to an embodiment of this application;
FIG. 3 is a diagram of a structure of an electronic device in a folded state according to an embodiment of this application;
FIG. 4 is a diagram of a partially exploded structure of an electronic device according to an embodiment of this application;
FIG. 5 is a diagram of a partially exploded structure of an electronic device in a related technology;
FIG. 6 is a diagram of a partial cross-sectional structure of an electronic device in a related technology;
FIG. 7 is a diagram of a partially exploded structure of an electronic device according to an embodiment of this application;
FIG. 8 is a diagram of a partial cross-sectional structure of an electronic device according to an embodiment of this application;
FIG. 9 is a diagram of radiation efficiency comparison simulation of an antenna in a related technology and an antenna according to an embodiment of this application;
FIG. 10 is a diagram of a partial structure of an electronic device according to an embodiment of this application;
FIG. 11 is a diagram of a partial structure of an electronic device according to another embodiment of this application;
FIG. 12 is a diagram of a partial structure of an electronic device according to still another embodiment of this application;
FIG. 13 is a diagram of a partial cross-sectional structure of an electronic device according to an embodiment of this application;
FIG. 14 is a diagram of a partial structure of an electronic device according to still another embodiment of this application;
FIG. 15 is a diagram of a partial structure of an electronic device according to still another embodiment of this application;
FIG. 16 is a diagram of a partial structure of an electronic device according to yet another embodiment of this application;
FIG. 17 is a diagram of a partial cross-sectional structure of an electronic device according to an embodiment of this application;
FIG. 18 is a diagram of a partial cross-sectional structure of an electronic device according to another embodiment of this application;
FIG. 19 is a diagram of a partial structure of an electronic device according to an embodiment of this application;
FIG. 20 is a diagram of a partial cross-sectional structure of an electronic device according to still another embodiment of this application;
FIG. 21 is a diagram of a partially exploded structure of an electronic device according to still another embodiment of this application;
FIG. 22 is a diagram of a partial structure of an electronic device according to an embodiment of this application;
FIG. 23 is a diagram of a partial structure of an electronic device according to another embodiment of this application;
FIG. 24 is a diagram of a partial structure of an electronic device according to yet another embodiment of this application;
FIG. 25 is a diagram of radiation efficiency comparison simulation of an antenna in a related technology and an antenna according to an embodiment of this application;
FIG. 26 is a diagram of a partially exploded structure of an electronic device according to yet another embodiment of this application;
FIG. 27 is an enlarged diagram of a position W in FIG. 26;
FIG. 28 is a diagram of a partial structure of an electronic device according to an embodiment of this application;
FIG. 29 is a diagram of a structure of an electronic device according to another embodiment of this application; and
FIG. 30 is a diagram of a partially exploded structure of an electronic device according to an embodiment of this application.

### Reference numerals:

10: electronic device;
20: display screen;
   21: screen body; 211: first display region; 212: second display region; 213: third display region;
   22: drive chip;
   23: flexible connection circuit board; 231: bending portion;
   24: metal backplane;
30: housing; 31: first housing; 32: second housing; 33: rotating shaft apparatus; 34: back cover;
40: middle frame; 40a: antenna gap; 40b: bezel;
   41: first radiator; 411: first conductive support leg;
   42: second radiator; 421: second conductive support leg;
50: metal middle plate;
60: main board;
70: battery;
80: reinforcement body; 80a: first recess; 80b: second recess;
   81: first reinforcement section; 82: second reinforcement section; 83: third reinforcement section;
90: insulating filler; 90a: first convex portion; 90b: second convex portion; 90c: third convex portion;
100: profiled surface;
200: avoidance recess;
300: third recess;
400: conductive connector;
500: conductive elastic member;
Z: thickness direction.

### DESCRIPTION OF EMBODIMENTS

An electronic device in embodiments of this application may be referred to as user equipment (user equipment, UE), a terminal (terminal), or the like. For example, the electronic device may be a mobile terminal such as a smart watch, a tablet computer (portable android device, PAD), a personal digital assistant (personal digital assistant, PDA), a handheld device having a wireless communication function, a computing device, a vehicle-mounted device, a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), or a wireless terminal in a smart home (smart home), or a fixed terminal. A form of the terminal device is not specifically limited in embodiments of this application.

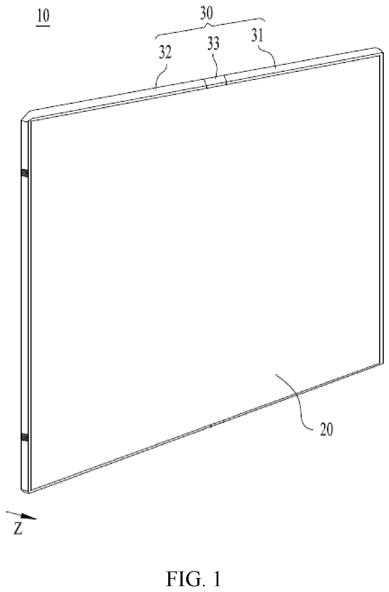

In an embodiment of this application, FIG. 1 schematically shows a structure of an electronic device 10 in an unfolded state. As shown in FIG. 1, an example in which the electronic device 10 is a handheld device having a wireless communication function is used for description. The handheld device having the wireless communication function may be but is not limited to, for example, a foldable-screen device. In this embodiment of this application, the foldable-screen device is used as an example for description. The foldable-screen device may be a foldable mobile phone including a foldable flexible display screen.

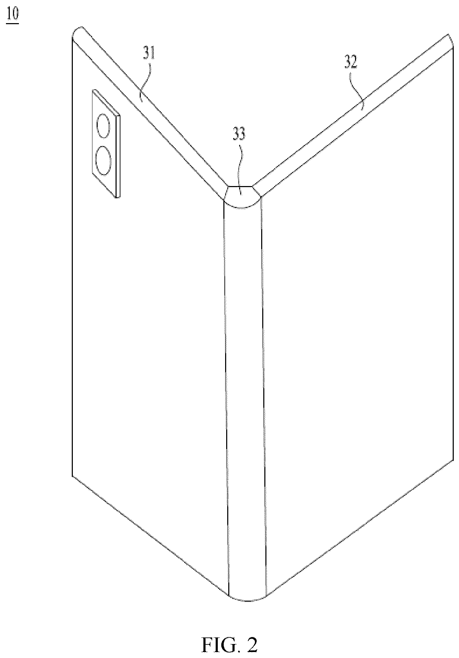

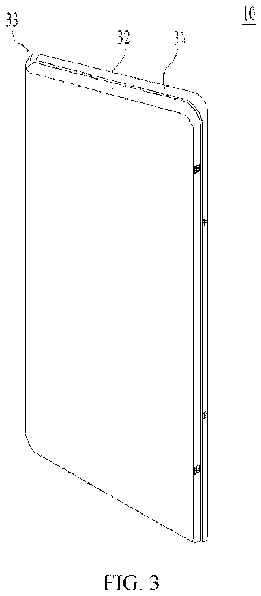

FIG. 2 schematically shows a structure of the electronic device 10 in a semi-folded state. FIG. 3 schematically shows a structure of the electronic device 10 in a folded state. As shown in FIG. 1 to FIG. 3. The electronic device 10 includes a display screen 20 and a housing 30. The display screen 20 may be an inner screen of the electronic device 10. The display screen 20 may be a flexible screen and is bendable. The housing 30 may provide a mounting base for another component. The housing 30 includes a first housing 31, a second housing 32, and a rotating shaft apparatus 33. The first housing 31 the second housing 32 are separately connected to the rotating shaft apparatus 33. The first housing 31 and the second housing 32 may be respectively disposed on two opposite sides of the rotating shaft apparatus 33. The display screen 20 is connected to the first housing 31 and the second housing 32.

Each of the first housing 31 and the second housing 32 may rotate and fold relative to the rotating shaft apparatus 33, so that the first housing 31 and the second housing 32 are stacked or unfolded with respect to each other. In this application, when the first housing 31 and the second housing 32 are stacked with each other, the electronic device 10 is in the folded state. When the first housing 31 and the second housing 32 move away from each other from a stacked state and are unfolded to a same plane, the electronic device 10 is in the unfolded state. A process in which each of the first housing 31 and the second housing 32 changes from the folded state to the unfolded state is an unfolding process, and a process in which each of the first housing 31 and the second housing 32 changes from the unfolded state to the folded state is a folding process.

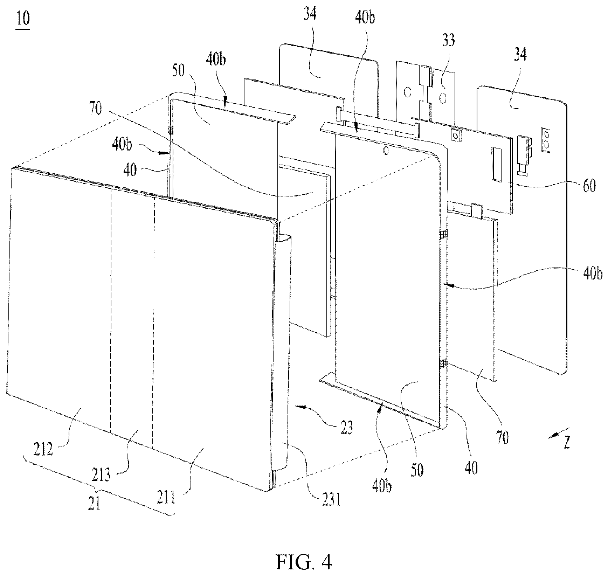

FIG. 4 schematically shows a partially exploded structure of the electronic device 10. As shown in FIG. 4, the first housing 31 and the second housing 32 may each include a middle frame 40. The middle frame 40 includes at least one bezel 40b. The middle frame 40 may be observed from outside of the electronic device 10. The display screen 20 may be disposed on one side of the middle frame 40. The housing 30 includes a back cover 34. In a thickness direction Z of the middle frame 40, the display screen 20 and the back cover 34 are disposed on two opposite sides of the middle frame 40. For example, the first housing 31 and the second housing 32 may each include the back cover 34. The back cover 34 may be disposed on one side of the middle frame 40. For example, a material of the back cover 34 may be an insulating material such as, but not limited to, glass or plastic. A material of the middle frame 40 may be but is not limited to aluminum, aluminum alloy, or steel. This is not specifically limited in this application. For example, in the thickness direction Z of the middle frame 40, the display screen 20 is spaced from the back cover 34.

In some implementable manners, the electronic device 10 may further include a metal middle plate 50. The metal middle plate 50 is disposed between the display screen 20 and the back cover 34. The middle frame 40 is connected to the metal middle plate 50. The middle frame 40 may be disposed around an outer periphery of the metal middle plate 50. The bezel 40b of the middle frame 40 may be connected to the metal middle plate 50. The metal middle plate 50 cannot be observed from outside the electronic device 10. For example, the material of the middle frame 40 may be the same as a material of the metal middle plate 50. The metal middle plate 50 and the middle frame 40 may be integrally formed or soldered. In the thickness direction Z of the middle frame 40, the metal middle plate 50 is located between the display screen 20 and the back cover 34.

The display screen 20 may include a screen body 21, a drive chip, a flexible connection circuit board 23, and a metal backplane. The screen body 21 is configured to display an image, and the screen body 21 has a pixel layer. The pixel layer includes a metal trace. The drive chip is disposed on a backlight side of the screen body 21. The flexible connection circuit board 23 is electrically connected to the screen body 21. The flexible connection circuit board 23 is bent to be connected to the drive chip. A bending region of the flexible connection circuit board 23 forms a bending portion 231. The metal backplane is disposed on the backlight side of the screen body 21. A material of the metal backplane may be but is not limited to copper or titanium alloy.

The display screen 20 can be bent after being subjected to an external force. When the electronic device 10 is in an unfolded state, the screen body 21 of the display screen 20 is unfolded to present image information to a user. The screen body 21 may include a first display region 211, a second display region 212, and a third display region 213. The first display region 211 and the second display region 212 are respectively disposed corresponding to the first housing 31 and the second housing 32. The third display region 213 may be disposed corresponding to a rotating shaft apparatus 33.

When the first housing 31 and the second housing 32 are in the folded state, the screen body 21 is in a bent state. The first display region 211 and the second display region 212 of the screen body 21 may be stacked with each other, and the third display region 213 may be bent into an arc-shaped state. For example, the third display region 213 may be bent into a droplet shape.

When the first housing 31 and the second housing 32 are in the unfolded state, the screen body 21 is in the unfolded state, and the first display region 211, the second display region 212, and the third display region 213 present a flat state. An overall size of the electronic device 10 may be changed through folding or unfolding, and there may be a large display area in the unfolded state.

The electronic device 10 further includes a main board 60. In the thickness direction Z of the middle frame 40, the main board 60 may be located between the display screen 20 and the back cover 34. The main board 60 may be disposed on the metal middle plate 50. The main board 60 may include a ground terminal. The metal middle plate 50 is electrically connected to the ground terminal of the main board 60. The electronic device 10 further includes an electronic component. An electronic component is disposed on the main board 60. The main board 60 may be a printed circuit board (printed circuit board, PCB). The electronic component may be soldered to the main board 60 by using a soldering process.

For example, the electronic component on the main board 60 may include but is not limited to a central processing unit (central processing unit, CPU), an intelligent algorithm chip, a power management IC (power management IC, PMIC), or a radio frequency integrated circuit (radio frequency integrated circuit, RFIC). Because internal space of the electronic device 10 is narrow, the electronic component may be integrated on the main board 60 to sufficiently reduce a volume of the main board 60 and reduce a space occupancy rate of the main board 60.

The electronic device 10 may further include a battery 70. The battery 70 may be disposed in the housing 30. For example, the battery 70 may be disposed between the back cover 34 and the metal middle plate 50. The battery 70 is a structural member that can convert chemical energy into electric energy. The battery 70 is configured to provide electrical energy to the electronic device 10 to ensure that the electronic device 10 works normally. For example, the battery 70 may provide electrical energy to the display screen 20, so that the display screen 20 displays the image information or completes corresponding operation instructions, or the battery 70 may provide electrical energy to the electronic component to ensure that the electronic component works normally. For example, the battery 70 may be a lithium ion battery, such as a lithium iron phosphate battery.

To ensure good communication performance of the electronic device 10, the middle frame 40 may be used as a radiator of an antenna. The radiator is configured to receive or transmit electromagnetic wave signals, so that the electronic device 10 implements a wireless communication function. The bezel 40b of the middle frame 40 may include a first radiator and a second radiator. Adjacent end portions of the first radiator and the second radiator are spaced apart to form an antenna gap. The first radiator includes a first conductive support leg. The second radiator includes a second conductive support leg. The first radiator may be electrically connected to the main board 60 through the first conductive support leg, and the second radiator may be electrically connected to the main board 60 through the second conductive support leg.

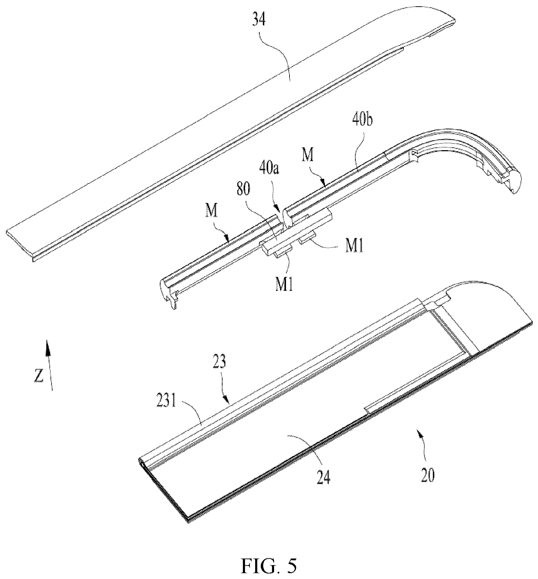

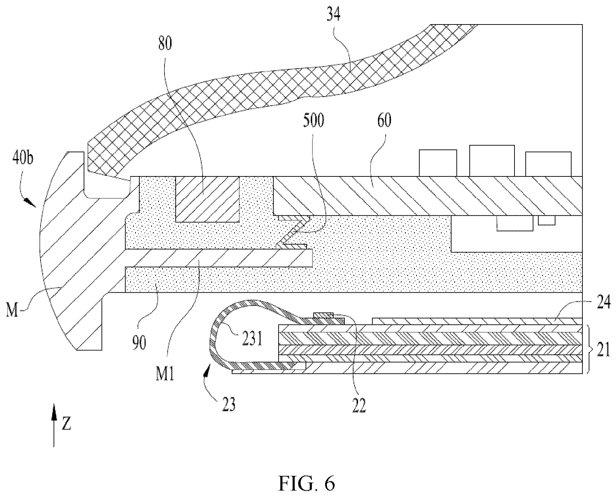

FIG. 5 schematically shows a partially exploded structure of an electronic device 10 in a related technology. FIG. 6 schematically shows a partial cross-sectional structure of the electronic device 10 in the related technology. As shown in FIG. 5 and FIG. 6, in the related technology, an antenna gap 40a is provided on a bezel 40b, and radiators M are formed on two sides of the antenna gap 40a, so that structural strength of the bezel 40b decreases. For example, for an electronic device 10 with a narrow frame or a curved screen, after the antenna gap 40a is provided on the bezel 40b, structural strength of the bezel 40b further decreases, and consequently, a bearing capacity of the bezel 40b decreases. To improve a problem that local structural strength of the electronic device 10 decreases, a reinforcement body 80 is disposed at a position corresponding to the antenna gap 40a to enhance structural strength at a position on the bezel 40b where the antenna gap 40a is provided. Conductive support legs M1 of the radiators M are disposed on one side that is of the reinforcement body 80 and that faces a display screen 20. Each radiator M may include one conductive support leg M1. The reinforcement body 80 is spaced from two conductive support legs M1, that is, the reinforcement body 80 is not in contact with two conductive support legs M1, and the reinforcement body 80 is insulated from the conductive support legs M1. The conductive support legs M1 of the radiators M are closer to the display screen 20 than the reinforcement body 80. The display screen 20 has a metal structural member. For example, the metal structural member includes a metal trace in a pixel layer. Alternatively, the metal structural member includes a metal trace in a flexible connection circuit board 23. Alternatively, the metal structural member includes a metal backplane 24 disposed on a backlight side of a screen body 21. Because internal space of the electronic device 10 is narrow, and layout space of the reinforcement body 80 and the conductive support legs M1 is compact, a minimum distance between the conductive support legs M1 and the display screen 20 is small. This causes the metal structural member in the display screen 20 to have adverse effect on an electromagnetic wave signal received or transmitted by the radiators M, and consequently, the radiators M have relatively reduced antenna performance.

It should be noted that the minimum distance between the conductive support legs M1 and the display screen 20 means a spacing with a minimum value among a spacing between the conductive support legs M1 and the pixel layer, a spacing between the conductive support legs M1 and a bending portion 231 of the flexible connection circuit board 23, and a spacing between the conductive support legs M1 and the metal backplane 24.

The electronic device 10 provided in this embodiment of this application includes a middle frame 40 that has the radiators, and the reinforcement body 80. In this embodiment of this application, a manner of disposing the conductive support legs of the radiators and the reinforcement body 80 enables the reinforcement body 80 to help enhance structural strength at a position on the middle frame 40 where the antenna gap 40a is provided, and may ensure that the radiators have good antenna performance.

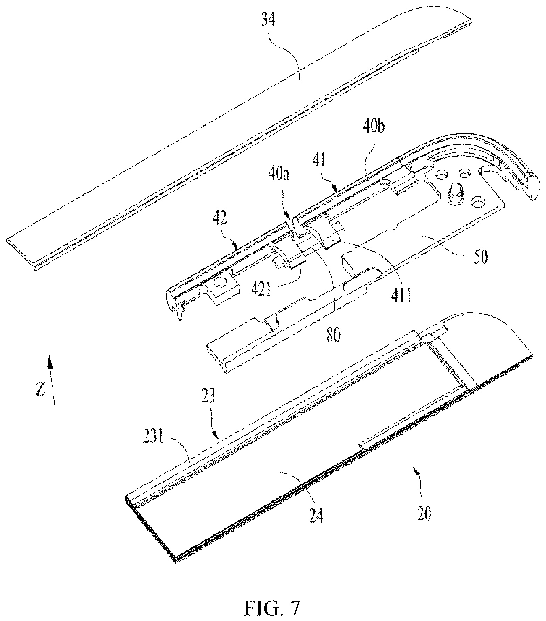

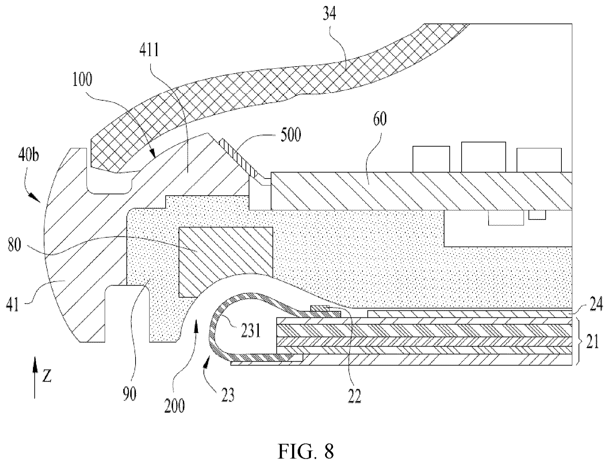

FIG. 7 schematically shows a partially exploded structure of the electronic device 10. FIG. 8 schematically shows a partial cross-sectional structure of the electronic device 10. As shown in FIG. 7 and FIG. 8, the electronic device 10 in this embodiment of this application includes the display screen 20, the back cover 34, the middle frame 40, and the reinforcement body 80.

The middle frame 40 includes at least one bezel 40b. The bezel 40b includes a first radiator 41 and a second radiator 42. Adjacent end portions of the first radiator 41 and the second radiator 42 are spaced apart to form the antenna gap 40a. For example, in a length direction of the bezel 40b, the first radiator 41 is spaced from the second radiator 42. The antenna gap 40a is configured to isolate the first radiator 41 and the second radiator 42 on two sides to reduce a possibility of mutual interference between the first radiator 41 and the second radiator 42. The first radiator 41 and the second radiator 42 may be configured to receive or transmit the electromagnetic wave signals, so that the electronic device 10 implements a wireless communication function. The first radiator 41 includes a first conductive support leg 411. The first radiator 41 may be electrically connected to an external related structural member through the first conductive support leg 411. For example, the first radiator 41 may be electrically connected to the main board 60 through the first conductive support leg 411. For example, the first conductive support leg 411 may be electrically connected to the main board 60 through a conductive elastic member 500. The second radiator 42 includes a second conductive support leg 421. The second radiator 42 may be electrically connected to the external related structural member through the second conductive support leg 421. For example, the second radiator 42 may be electrically connected to the main board 60 through the second conductive support leg 421. For example, the second conductive support leg 421 may be electrically connected to the main board 60 through the conductive elastic member 500. For example, the first conductive support leg 411 and the second conductive support leg 421 may be disposed close to the antenna gap 40a.

The display screen 20 and the back cover 34 are disposed on the middle frame 40. In the thickness direction Z of the middle frame 40, the display screen 20 and the back cover 34 are disposed on two opposite sides of the middle frame 40. The thickness direction Z of the middle frame 40 may be the same as a thickness direction of the electronic device 10. The reinforcement body 80 is located between the display screen 20 and the back cover 34. Both the first conductive support leg 411 and the second conductive support leg 421 are spaced from the reinforcement body 80, that is, the reinforcement body 80 is not in contact with the first conductive support leg 411, and the reinforcement body 80 is not in contact with the second conductive support leg 421. In addition, the reinforcement body 80 is insulated from the first conductive support leg 411, and the reinforcement body 80 is insulated from the second conductive support leg 421. The reinforcement body 80 is disposed opposite to the antenna gap 40a. The reinforcement body 80 is spaced from the middle frame 40, so that the reinforcement body 80 and the middle frame 40 are in an indirect contact state. The reinforcement body 80 is insulated from the middle frame 40. One end of the reinforcement body 80 is located on one side of the antenna gap 40a, and the other end is located on the other side of the antenna gap 40a, so that in a direction perpendicular to the thickness direction Z, an orthographic projection of the reinforcement body 80 has an overlapping region with an orthographic projection of the antenna gap 40a.

In the thickness direction Z of the middle frame 40, at least one of the first conductive support leg 411 and the second conductive support leg 421 is located on one side that is of the reinforcement body 80 and that faces away from the display screen 20. Therefore, the at least one of the first conductive support leg 411 and the second conductive support leg 421 is closer to the back cover 34 and farther away from the display screen 20 than the reinforcement body 80. The back cover 34 is an insulating structural member, so that the back cover 34 does not have adverse effect on a wireless signal received or transmitted by the first conductive support leg 411 and the second conductive support leg 421.

In the electronic device 10 in this embodiment of this application, the reinforcement body 80 is correspondingly disposed at a position on the bezel 40b where the antenna gap 40a is provided, to enhance, by using the reinforcement body 80, structural strength at the position on the bezel 40b where the antenna gap 40a is provided. This reduces a possibility that a bearing capacity of the bezel 40b is reduced and that the bezel 40b is easy to be deformed due to a decrease in the structural strength of the bezel 40b. In addition, the at least one of the first conductive support leg 411 and the second conductive support leg 421 is disposed on one side that is of the reinforcement body 80 and that faces away from the display screen 20. A distance between the at least one of the first conductive support leg 411 and the second conductive support leg 421 and the display screen 20 is large. This helps increase a clearance of the at least one of the first conductive support leg 411 and the second conductive support leg 421 in narrow space, to help improve antenna performance of at least one of the first radiator 41 and the second radiator 42. Therefore, in narrow space inside the electronic device 10, the reinforcement body 80, the first conductive support leg 411, and the second conductive support leg 421 may be disposed at the same time, to reduce a possibility that the first radiator 41 or the second radiator 42 has relatively reduced antenna performance due to a small clearance of the first conductive support leg 411 or the second conductive support leg 421 while improving the structural strength at the position on the bezel 40b where the antenna gap 40a is provided. This ensures that the at least one of the first radiator 41 and the second radiator 42 has good antenna performance.

In narrow space inside the electronic device 10, a layout of the reinforcement body 80, the first conductive support leg 411, and the second conductive support leg 421 is compact to help improve space utilization. Relative to the reinforcement body 80, both the first conductive support leg 411 and the second conductive support leg 421 are disposed in a region relatively far away from the display screen 20. This helps increase a minimum distance between the first conductive support leg 411 and the display screen 20 and a minimum distance between the second conductive support leg 421 and the display screen 20 and increase clearances of the first conductive support leg 411 and the second conductive support leg 421 in narrow space, to improve antenna performance of the first radiator 41 and the second radiator 42.

For example, both the first conductive support leg 411 and the second conductive support leg 421 are disposed corresponding to a bending portion 231 of a flexible connection circuit board 23 in the display screen 20. A minimum distance between the first conductive support leg 411 and the bending portion 231 of the flexible connection circuit board 23 may be 1.2 millimeters (mm) to 1.7 millimeters, so that the first conductive support leg 411 has a large clearance. For example, the minimum distance between the first conductive support leg 411 and the bending portion 231 of the flexible connection circuit board 23 may be 1.526 millimeters (mm). A minimum distance between the second conductive support leg 421 and the bending portion 231 of the flexible connection circuit board 23 may also be 1.2 millimeters (mm) to 1.7 millimeters, so that the second conductive support leg 421 has a large clearance. For example, the minimum distance between the second conductive support leg 421 and the bending portion 231 of the flexible connection circuit board 23 may be 1.526 millimeters.

In the thickness direction Z of the middle frame 40, an orthographic projection of the at least one of the first conductive support leg 411 and the second conductive support leg 421 has an overlapping region with the orthographic projection of the reinforcement body 80. The reinforcement body 80 may fully use space on one side that is of the at least one of the first conductive support leg 411 and the second conductive support leg 421 and that faces the display screen 20, so that a structure design of the reinforcement body 80, the first conductive support leg 411, and the second conductive support leg 421 is compact. This helps reduce a space occupancy rate of the reinforcement body 80, the first conductive support leg 411, and the second conductive support leg 421.

The first conductive support leg 411 and the reinforcement body 80 are in the indirect contact state. Correspondingly, the second conductive support leg 421 and the reinforcement body 80 are also in the indirect contact state. For example, in an embodiment in which an orthographic projection of the first conductive support leg 411 has an overlapping region with the orthographic projection of the reinforcement body 80, the first conductive support leg 411 is located between the reinforcement body 80 and the back cover 34. In an embodiment in which an orthographic projection of the second conductive support leg 421 has an overlapping region with the orthographic projection of the reinforcement body 80, the second conductive support leg 421 is located between the reinforcement body 80 and the back cover 34. In an embodiment in which the orthographic projection of the first conductive support leg 411 and the orthographic projection of the second conductive support leg 421 each have an overlapping region with the orthographic projection of the reinforcement body 80, both the first conductive support leg 411 and the second conductive support leg 421 are located between the reinforcement body 80 and the back cover 34.

In some possible implementations, a material of the reinforcement body 80 may be different from a material of the bezel 40b. The material of the reinforcement body 80 may be a metal material such as, but not limited to, aluminum or aluminum alloy. The material of the reinforcement body 80 may alternatively be non-metal such as, but not limited to, ceramic.

In some implementable manners, in the first radiator 41 and the second radiator 42 that are on two sides of the antenna gap 40a, the first radiator 41 and the second radiator 42 may respectively form antennas. Both the first conductive support leg 411 and the second conductive support leg 421 are feed portions. The first conductive support leg 411 and the second conductive support leg 421 may be electrically connected to different feed points on the main board 60.

The main board 60 may feed a wireless signal to the first radiator 41 through a corresponding feed point and the first conductive support leg 411, so that the first radiator 41 radiates the wireless signal and generates an operating frequency band covering a first resonance frequency. The main board 60 may alternatively feed the wireless signal to the second radiator 42 through a corresponding feed point and the second conductive support leg 421, so that the second radiator 42 radiates the wireless signal and generates an operating frequency band covering a second resonance frequency. Therefore, receiving frequencies or transmitting frequencies of the first radiator 41 and the second radiator 42 may be different.

In some examples, one of the first radiator 41 and the second radiator 42 on two sides of the antenna gap 40a may be a main stub, and the other may be a parasitic stub. For example, the first radiator 41 may be the main stub. The first conductive support leg 411 may be a feed portion. The second radiator 42 may be the parasitic stub. The second conductive support leg 421 may be a tuning portion. The first conductive support leg 411 of the first radiator 41 is electrically connected to the feed point of the main board 60. In this case, the main board 60 may feed the wireless signal into the first radiator 41, so that the first radiator 41 serves as the antenna to generate the operating frequency band covering the first resonance frequency. The second conductive support leg 421 of the second radiator 42 may be electrically connected to the main board 60, so that the second radiator 42 serves as the parasitic stub of the first radiator 41. In this case, the first radiator 41 and the second radiator 42 may be coupled to each other to generate the operating frequency band covering the second resonance frequency. In the foregoing solution, in a manner in which the parasitic stub and the main stub are coupled and connected to each other, the parasitic stub may be configured to excite resonance to improve main resonance of the main stub or expand bandwidth of the main stub. For example, both the parasitic stub and the main stub may be configured to receive or transmit electromagnetic wave signals.

For example, the first radiator 41 may support a medium-high band (MHB). For example, a frequency band range of the medium-high band is 1000 MHz to 3000 MHz. The second radiator 42 may support an N78 frequency band. For example, the N78 frequency band ranges from 3300 MHz to 3800 MHz.

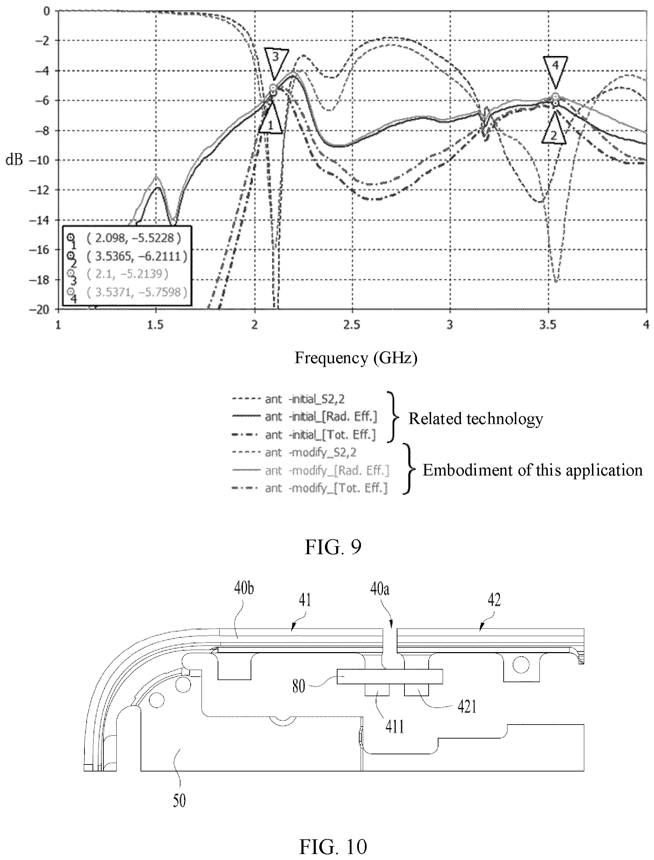

FIG. 9 is a diagram of radiation efficiency comparison simulation of an antenna in a related technology and an antenna according to an embodiment of this application. The antenna is a left-handed antenna. As shown in FIG. 9, compared with the related technology, in this embodiment of this application, the first radiator 41 may be the main stub. The second radiator 42 may be the parasitic stub. In a manner in which both the first conductive support leg 411 and the second conductive support leg 421 are disposed on one side that is of the reinforcement body 80 and that faces away from the display screen 20, radiation efficiency of a medium-high frequency band can be improved by 0.3 dB, radiation efficiency of a high channel of the N78 frequency band is improved by 0.5 dB, and bandwidth of both the medium-high frequency band and the N78 frequency band are expanded to some extent. Therefore, the reinforcement body 80, the first conductive support leg 411, and the second conductive support leg 421 in this embodiment of this application may be disposed in the electronic device 10 at the same time, and a manner of disposing the reinforcement body 80, the first conductive support leg 411, and the second conductive support leg 421 helps improve antenna performance.

In some examples, a distance between the reinforcement body 80 and the first conductive support leg 411 is 0.5 millimeters or more. A large distance may be maintained between the reinforcement body 80 and the first conductive support leg 41. This may reduce a possibility that the reinforcement body 80 has adverse effect on an electromagnetic wave signal received or transmitted by the first conductive support leg 41. For example, a minimum distance between the reinforcement body 80 and the first conductive support leg 411 is 0.5 millimeters.

A distance between the reinforcement body 80 and the second conductive support leg 421 is 0.5 millimeters or more. A large distance may be maintained between the reinforcement body 80 and the second conductive support leg 42. This may reduce a possibility that the reinforcement body 80 has adverse effect on an electromagnetic wave signal received or transmitted by the second conductive support leg 42. For example, a minimum distance between the reinforcement body 80 and the second conductive support leg 421 is 0.5 millimeters.

A distance between the reinforcement body 80 and the display screen 20 is 0.25 millimeters or more. For example, a minimum distance between the reinforcement body 80 and the display screen 20 is 0.25 millimeters. For example, a spacing between the reinforcement body 80 and the bending portion 231 of the flexible connection circuit board 23 may be the minimum distance between the reinforcement body 80 and the display screen 20. Alternatively, a spacing between the reinforcement body 80 and the metal backplane 24 may be the minimum distance between the reinforcement body 80 and the display screen 20. Alternatively, a spacing between the reinforcement body 80 and the pixel layer may be the minimum distance between the reinforcement body 80 and the display screen 20.

In some implementable manners, the at least one of the first conductive support leg 411 and the second conductive support leg 421 is provided with a profiled surface 100 facing the back cover 34 (as shown in FIG. 8). A shape of the profiled surface 100 is the same as a shape of an inner wall of the back cover 34. There is a gap between the profiled surface 100 and the inner wall. This prevents position interference from occurring between the first conductive support leg 411 or the second conductive support leg 421 and the back cover 34, and at the same time, may also prevent a case in which the back cover 34 collapses under external pressing to cause squeezing on the first conductive support leg 411 or the second conductive support leg 421.

For example, the first conductive support leg 411 and the second conductive support leg 421 each include the profiled surface 100 facing the back cover 34.

For example, the shape of the inner wall that is of the back cover 34 and that faces the profiled surface 100 is an arc shape. Correspondingly, the shape of the profiled surface 100 is also an arc shape.

In some implementable manners, the electronic device 10 further includes an insulating filler 90. The insulating filler 90 connects the reinforcement body 80 and the bezel 40b. For example, the reinforcement body 80 is embedded in the insulating filler 90. The insulating filler 90 may connect the bezel 40b and the reinforcement body 80 into a whole, so that the bezel 40b, the reinforcement body 80, and the insulating filler 90 may form a combination. This may help further improve the structural strength at the position on the bezel 40b where the antenna gap 40a is provided, and improve an impact resistance capability of the bezel 40b. For example, a part of the insulating filler 90 may be filled in the antenna gap 40a. The insulating filler 90 may connect the first radiator 41 and the second radiator 42 on two sides of the antenna gap 40a in an insulated manner, so that continuity of the bezel 40b can be ensured. This helps improve the structural strength of the bezel 40b, and the insulating filler 90 does not affect antenna performance.

For example, the insulating filler 90 may be an insulating adhesive. The bezel 40b, the reinforcement body 80, and the insulating filler 90 may form the combination by using an injection molding process.

In some implementable manners, the flexible connection circuit board 23 is located on one side that is of the reinforcement body 80 and that is far away from the back cover 34. One end of the flexible connection circuit board 23 is connected to the screen body 21, and the other end is electrically connected to the drive chip 22 disposed on the backlight side of the screen body 21. A middle part of the flexible connection circuit board 23 forms the bending portion 231. The reinforcement body 80 is disposed corresponding to the bending portion 231. A surface that is of the insulating filler 90 and that faces the flexible connection circuit board 23 is provided with an avoidance recess 200. The avoidance recess 200 avoids the bending portion 231, to prevent a case in which the bending portion 231 is squeezed by the insulating filler 80 and is damaged. The avoidance recess 200 has an opening facing the bending portion 231.

At least a part of the bending portion 231 may be located in the avoidance recess 200. This can help improve space utilization in narrow space. A shape of a wall surface that is of the avoidance recess 200 and that faces the bending portion 231 may match a shape of the bending portion 231. For example, the shape of the bending portion 231 is an arc shape, and correspondingly, the shape of the wall surface that is of the avoidance recess 200 and that faces the bending portion 231 is also the arc shape. There is a gap between the wall surface that is of the avoidance recess 200 and that faces the bending portion 231 and the bending portion 231.

At least a part of a surface that is of the reinforcement body 80 and that faces the flexible connection circuit board 23 forms a bottom wall of the avoidance recess 200. The reinforcement body 80 may avoid the bending portion 231, and the reinforcement body 80 is relatively far away from the bending portion 231, to prevent the case in which the bending portion 231 is squeezed by the reinforcement body 80 and is damaged.

For example, before the insulating filler 90 is disposed, the reinforcement body 80 is connected to the bezel 40b through a metal connector, to fasten a position of the reinforcement body 80. Then, the insulating filler 90 is disposed. After the reinforcement body 80, the insulating filler 90, and the bezel 40b are combined, the metal connector is removed, and a part of the insulating filler 90 and a part of the reinforcement body 80 are removed at the same time, so that the avoidance recess 200 is finally formed.

In some implementable manners, the orthographic projection of the first conductive support leg 411 and the orthographic projection of the second conductive support leg 421 each have the overlapping area with the orthographic projection of the reinforcement body 80. Both the first conductive support leg 411 and the second conductive support leg 421 are located between the reinforcement body 80 and the back cover 34.

In some examples, FIG. 10 schematically shows a partial structure of the electronic device 10. As shown in FIG. 10, in the thickness direction Z of the middle frame 40, the orthographic projection of the reinforcement body 80 may be rectangular, for example, may be square. A shape of the reinforcement body 80 is relatively regular. This helps reduce processing difficulty. The first conductive support leg 411 and the second conductive support leg 421 are spaced apart in a length direction of the reinforcement body 80. In a width direction of the reinforcement body 80, the at least one of the first conductive support leg 411 or the second conductive support leg 421 extends beyond the reinforcement body 80.

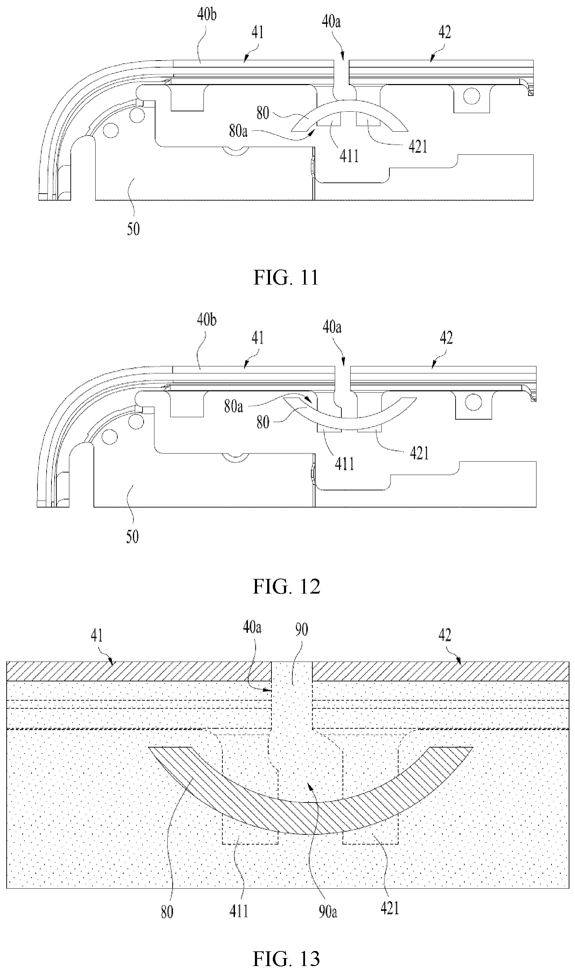

In some examples, FIG. 11 schematically shows a partial structure of the electronic device 10. As shown in FIG. 11, the reinforcement body 80 includes a first recess 80a. An opening of the first recess 80a faces away from the antenna gap 40a. A middle part of the reinforcement body 80 is closer to the antenna gap 40a. The middle part of the reinforcement body 80 is far away from the main board 60, so that position interference is not likely to be formed between the middle part of the reinforcement body 80 and the main board 60, to prevent a size of the main board 60 from being reduced due to a need for the main board 60 to avoid the middle part of the reinforcement body 80.

FIG. 12 schematically shows a partial structure of the electronic device 10. FIG. 13 schematically shows a partial cross-sectional structure of the electronic device 10. As shown in FIG. 12 and FIG. 13, the opening of the first recess 80a faces the antenna gap 40a, so that the middle part of the reinforcement body 80 is far away from the bezel 40b, and a large quantity of insulating fillers 90 may be accommodated between the reinforcement body 80 and the bezel 40b. This helps improve connection strength between the reinforcement body 80, the bezel 40b, and the insulating filler 90, to improve structural strength of the combination formed by the reinforcement body 80, the insulating filler 90, and the bezel 40b. The middle part of the reinforcement body 80 is far away from the antenna gap 40a. The insulating filler 90 covers the first recess 80a, so that the first recess 80a is embedded in the insulating filler 90. The insulating filler 90 has a first convex portion 90a that matches a shape of the first recess 80a, to help increase connection strength between the insulating filler 90 and the reinforcement body 80 and improve a bonding force between the insulating filler 90 and the reinforcement body 80, so as to help improve structural strength of the combination formed by the reinforcement body 80, the insulating filler 90, and the bezel 40b. For example, in the thickness direction Z of the middle frame 40, the first recess 80a penetrates through the reinforcement body 80.

For example, the reinforcement body 80 may be arc-shaped. A surface of the arc-shaped reinforcement body 80 is smooth and flat, has a regular shape, and is easy to be processed and manufactured. In addition, when bearing stress, the reinforcement body 80 has good force balance. For example, the reinforcement body 80 may be circular-arc-shaped.

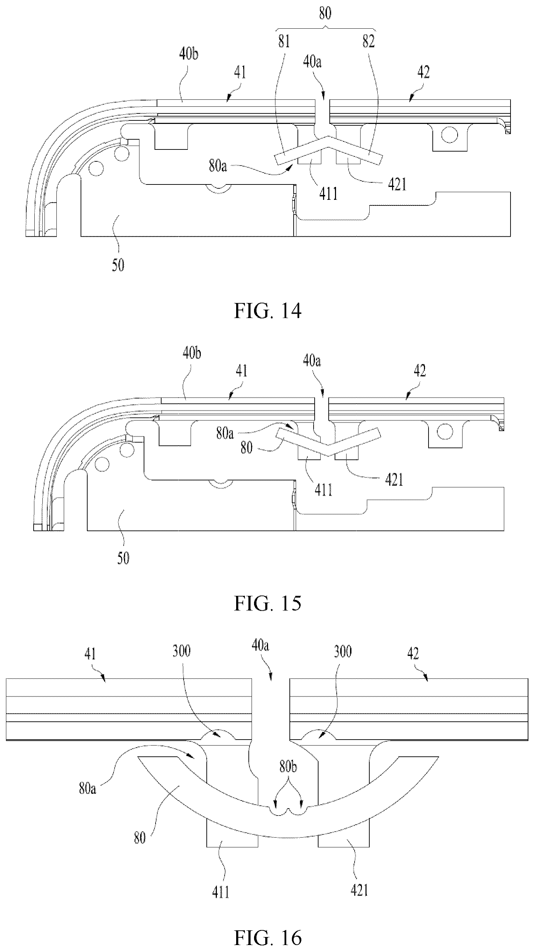

For example, FIG. 14 schematically shows a partial structure of the electronic device 10. As shown in FIG. 14, the reinforcement body 80 includes a first reinforcement section 81 and a second reinforcement section 82 that are disposed in an intersecting manner. The first reinforcement section 81 and the second reinforcement section 82 are separately embedded in the insulating filler 90 at different angles, to help increase the connection strength between the insulating filler 90 and the reinforcement body 80 and improve the bonding force between the insulating filler 90 and the reinforcement body 80. Both the first reinforcement section 81 and the second reinforcement section 82 may be flat sections, so that the reinforcement body 80 is in a "V" shape as a whole. For example, an included angle between the first reinforcement section 81 and the second reinforcement section 82 may be greater than or equal to 90 degrees. The opening of the first recess 80a faces away from the antenna gap 40a. For example, the first reinforcement section 81 corresponds to the first conductive support leg 411, and the second reinforcement section 82 corresponds to the second conductive support leg 421. Alternatively, FIG. 15 schematically shows a partial structure of the electronic device 10. As shown in FIG. 15, the opening of the first recess 80a faces the antenna gap 40a.

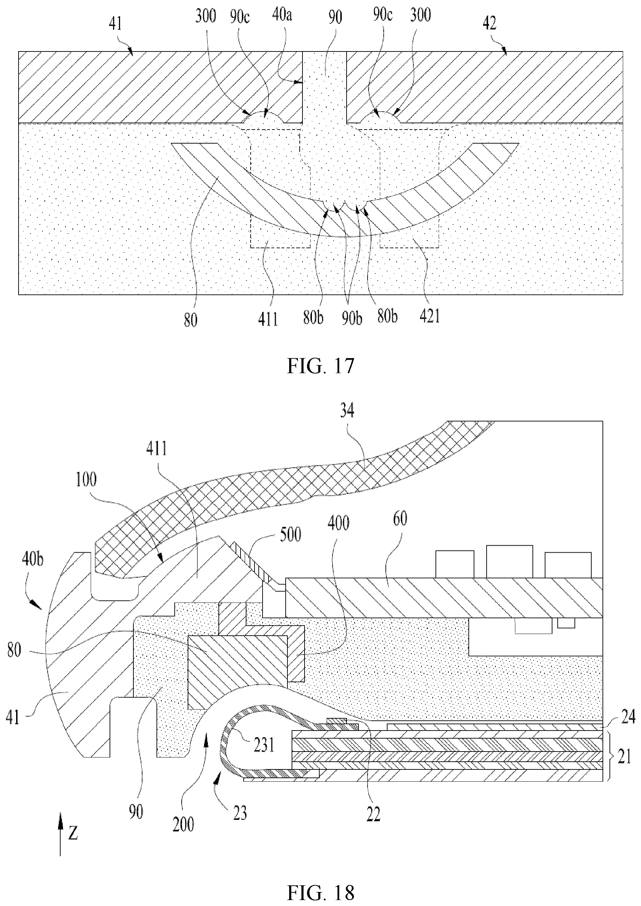

For example, FIG. 16 schematically shows a partial structure of the electronic device 10. FIG. 17 schematically shows a partial cross-sectional structure of the electronic device 10. As shown in FIG. 16 and FIG. 17, the opening of the first recess 80a faces the antenna gap 40a. A bottom wall of the first recess 80a is provided with a second recess 80b. The first recess 80a communicates with the second recess 80b. The insulating filler 90 covers the first recess 80a and the second recess 80b. The insulating filler 90 covers the first recess 80a and the second recess 80b, so that the first recess 80a and the second recess 80b are embedded in the insulating filler 90. The insulating filler 90 has the first convex portion 90a that matches the shape of the first recess 80a and a second convex portion 90b that matches a shape of the second recess 80b, to help further increase the connection strength between the insulating filler 90 and the reinforcement body 80 and improve the bonding force between the insulating filler 90 and the reinforcement body 80, so as to help further improve the structural strength of the combination formed by the reinforcement body 80, the insulating filler 90, and the bezel 40b. For example, in the thickness direction Z of the middle frame 40, the second recess 80b may penetrate through the reinforcement body 80. For example, there are at least two second recesses 80b. A quantity of the second convex portions 90b is equal to a quantity of the second recesses 80b.

Further, an inner wall of the at least one of the first radiator 41 and the second radiator 42 may be provided with a third recess 300, that is, an inner wall of the first radiator 41 may be provided with the third recess 300, or an inner wall of the second radiator 42 may be provided with the third recess 300, or inner walls of the first radiator 41 and the second radiator 42 each are provided with the third recess 300. The third recess 300 faces the reinforcement body 80. For example, the second recess 80b and the third recess 300 may be disposed in a staggered manner. The insulating filler 90 covers the third recess 300. The insulating filler 90 covers the first recess 80a, the second recess 80b, and the third recess 300, so that the first recess 80a, the second recess 80b, and the third recess 300 are embedded in the insulating filler 90. The insulating filler 90 further has a third convex portion 90c that matches a shape of the third recess 300, to help further increase the connection strength between the insulating filler 90 and the reinforcement body 80 and improve the bonding force between the insulating filler 90 and the reinforcement body 80, so as to help further improve the structural strength of the combination formed by the reinforcement body 80, the insulating filler 90, and the bezel 40b.

In some implementable manners, the electronic device 10 further includes the metal middle plate 50 and the main board 60. In the thickness direction Z of the middle frame 40, both the metal middle plate 50 and the main board 60 are located between the display screen 20 and the back cover 34. Both the first radiator 41 and the second radiator 42 are electrically connected to the metal middle plate 50. The main board 60 may be disposed on the metal middle plate 50. The main board 60 includes the ground terminal. The metal middle plate 50 is electrically connected to the ground terminal, so that the first radiator 41 and the second radiator 42 are grounded.

In a manner in which the first radiator 41 and the second radiator 42 are grounded with the main board 60 by using the metal middle plate 50, a grounding structural member may not need to be additionally disposed between the first radiator 41 and the main board 60 and between the second radiator 42 and the main board 60. This helps reduce a quantity of used parts.

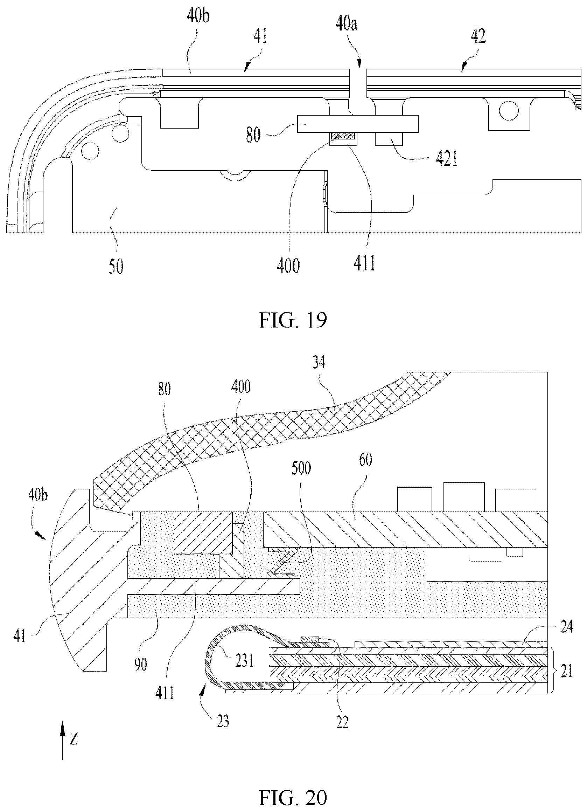

In some implementable manners, FIG. 18 schematically shows a partial cross-sectional structure of the electronic device 10. FIG. 19 schematically shows a partial structure of the electronic device 10. As shown in FIG. 18 and FIG. 19, in the thickness direction Z of the middle frame 40, both the first conductive support leg 411 and the second conductive support leg 421 are located on one side that is of the reinforcement body 80 and that faces away from the display screen 20. The reinforcement body 80 is disposed close to the display screen 20.

In some examples, the electronic device 10 further includes a conductive connector 400. The reinforcement body 80 is a conductor. One of the first conductive support leg 411 and the second conductive support leg 421 is connected to the reinforcement body 80 through the conductive connector 400. One of the first radiator 41 and the second radiator 42 on two sides of the antenna gap 40a may be a main stub, and the other may be a parasitic stub. The reinforcement body 80 is connected to the first radiator 41 or the second radiator 42 serving as the main stub.

For example, the first radiator 41 may be the main stub. The first conductive support leg 411 may be a feed portion. The second radiator 42 may be the parasitic stub. The second conductive support leg 421 may be a tuning portion. The first conductive support leg 411 of the first radiator 41 is electrically connected to a feed point of the main board 60. In this case, the main board 60 may feed the wireless signal into the first radiator 41, so that the first radiator 41 serves as an antenna to generate an operating frequency band covering a first resonance frequency. The second conductive support leg 421 of the second radiator 42 may be electrically connected to the main board 60, so that the second radiator 42 serves as the parasitic stub of the first radiator 41. In this case, the first radiator 41 and the second radiator 42 may be coupled to each other to generate an operating frequency band covering a second resonance frequency.

For example, the first radiator 41 may support a medium-high band (MHB). For example, a frequency band range of the medium-high band is 1000 MHz to 3000 MHz. The second radiator 42 may support an N78 frequency band. For example, the N78 frequency band ranges from 3300 MHz to 3800 MHz.

In this embodiment of this application, for a manner in which the reinforcement body 80 is electrically connected to the first conductive support leg 411, or the reinforcement body 80 is electrically connected to the second conductive support leg 421, the reinforcement body 80 helps enhance gap coupling strength between the first radiator 41 and the second radiator 42, to improve coupling electric field strength between the first radiator 41 and the second radiator 42, so as to help improve antenna performance. In addition, the reinforcement body 80 is connected to the first conductive support leg 411, or the reinforcement body 80 is connected to the second conductive support leg 421. This helps improve connection strength and connection stability between the reinforcement body 80 and the first radiator 41 or between the reinforcement body 80 and the second radiator 42, to help improve the structural strength of the combination formed by the reinforcement body 80, the insulating filler 90, and the bezel 40b.

The reinforcement body 80, the conductive connector 400, and one of the first conductive support leg 411 and the second conductive support leg 421 are of an integrally formed structure. This helps increase structural strength of the reinforcement body 80, the conductive connector 400, and one of the first conductive support leg 411 and the second conductive support leg 421, and further helps improve structural strength of a combination formed by the reinforcement body 80, the insulating filler 90, and the middle frame 40.

In some examples, the first conductive support leg 411 is connected to the reinforcement body 80 through the conductive connector 400. Materials of the reinforcement body 80, the conductive connector 400, and the first conductive support leg 411 may be the same. The reinforcement body 80, the conductive connector 400, and the first conductive support leg 411 are of an integrally formed structure. This helps increase structural strength of the reinforcement body 80, the conductive connector 400, and the first conductive support leg 411, and further helps improve the structural strength of the combination formed by the reinforcement body 80, the insulating filler 90, and the bezel 40b. For example, the materials of the reinforcement body 80, the conductive connector 400, and the first conductive support leg 411 may be but is not limited to aluminum or aluminum alloy.

In some examples, the second conductive support leg 421 is connected to the reinforcement body 80 through the conductive connector 400. Materials of the reinforcement body 80, the conductive connector 400, and the second conductive support leg 421 may be the same. The reinforcement body 80, the conductive connector 400, and the second conductive support leg 421 are of an integrally formed structure. This helps increase structural strength of the reinforcement body 80, the conductive connector 400, and the second conductive support leg 421, and further helps improve the structural strength of the combination formed by the reinforcement body 80, the insulating filler 90, and the bezel 40b. For example, the materials of the reinforcement body 80, the conductive connector 400, and the second conductive support leg 421 may be but is not limited to aluminum or aluminum alloy.

In some examples, the conductive connector 400 is a solder bump. One of the first conductive support leg 411 and the second conductive support leg 421 is soldered to the reinforcement body 80. After a soldering operation between one of the first conductive support leg 411 and the second conductive support leg 421 and the reinforcement body 80 is completed, a formed solder bump is the conductive connector 400. For example, the material of the reinforcement body 80 may be the same as the material of the bezel 40b. For example, both the material of the reinforcement body 80 and the material of the bezel 40b are aluminum or aluminum alloy.

An embodiment of this application further provides an electronic device 10. For structures in the electronic device 10 in this embodiment that are the same as those in the foregoing electronic device 10, details are not described herein again. In the electronic device 10, a reinforcement body 80 is disposed opposite to an antenna gap 40a. The reinforcement body 80 is spaced from a bezel 40b, and the reinforcement body 80 is insulated from the bezel 40b. Both a first conductive support leg 411 and a second conductive support leg 421 are spaced from the reinforcement body 80. In addition, the reinforcement body 80 is insulated from the first conductive support leg 411, and the reinforcement body 80 is insulated from the second conductive support leg 421. The electronic device 10 further includes a conductive connector 400. One of the first conductive support leg 411 and the second conductive support leg 421 is electrically connected to the reinforcement body 80 through the conductive connector 400.

For example, one of a first radiator 41 and a second radiator 42 on two sides of the antenna gap 40a may be a main stub, and the other may be a parasitic stub. The reinforcement body 80 is connected to the first radiator 41 or the second radiator 42 serving as the main stub.

For example, the first radiator 41 may be the main stub. The first conductive support leg 411 may be a feed portion. The second radiator 42 may be the parasitic stub. The second conductive support leg 421 may be a tuning portion. The first conductive support leg 411 of the first radiator 41 is electrically connected to a feed point of a main board 60. In this case, the main board 60 may feed a wireless signal into the first radiator 41, so that the first radiator 41 serves as an antenna to generate an operating frequency band covering a first resonance frequency. The second conductive support leg 421 of the second radiator 42 may be electrically connected to the main board 60, so that the second radiator 42 serves as the parasitic stub of the first radiator 41. In this case, the first radiator 41 and the second radiator 42 may be coupled to each other to generate an operating frequency band covering a second resonance frequency. For example, the first radiator 41 may support a medium-high band (MHB). For example, a frequency band range of the medium-high band is 1000 MHz to 3000 MHz. The second radiator 42 may support an N78 frequency band. For example, the N78 frequency band ranges from 3300 MHz to 3800 MHz.

In the electronic device 10 in this embodiment of this application, for a manner in which the reinforcement body 80 is electrically connected to the first conductive support leg 411, or the reinforcement body 80 is electrically connected to the second conductive support leg 421, the reinforcement body 80 helps enhance gap coupling strength between the first radiator 41 and the second radiator 42, to improve coupling electric field strength between the first radiator 41 and the second radiator 42 on two sides of the antenna gap 40a, so as to help improve antenna performance. In addition, the reinforcement body 80 is connected to the first conductive support leg 411, or the reinforcement body 80 is connected to the second conductive support leg 421. This helps improve connection strength and connection stability between the reinforcement body 80 and the first radiator 41 or between the reinforcement body 80 and the second radiator 42, to help improve structural strength of a combination formed by the reinforcement body 80, an insulating filler 90, and the bezel 40b.

In some implementable manner, as shown in FIG. 18 and FIG. 19, in the thickness direction Z of the middle frame 40, both the first conductive support leg 411 and the second conductive support leg 421 are located on one side that is of the reinforcement body 80 and that faces away from the display screen 20. The reinforcement body 80 is disposed close to the display screen 20. The electronic device 10 further includes the conductive connector 400. The reinforcement body 80 is a conductor. One of the first conductive support leg 411 and the second conductive support leg 421 is connected to the reinforcement body 80 through the conductive connector 400.

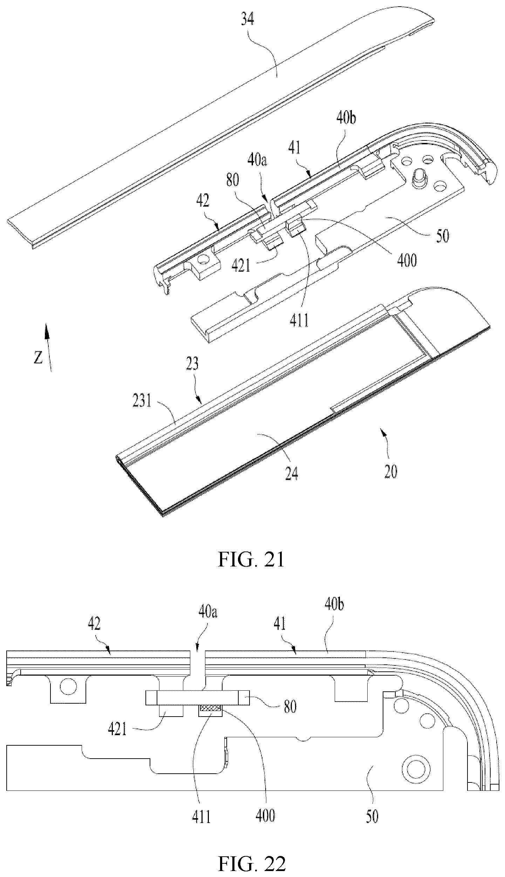

In some implementable manners, FIG. 20 schematically shows a partial cross-sectional structure of the electronic device 10. FIG. 21 schematically shows a partially exploded structure of the electronic device 10. As shown in FIG. 20 and FIG. 21, in the thickness direction Z of the middle frame 40, both the first conductive support leg 411 and the second conductive support leg 421 are located on one side that is of the reinforcement body 80 and that faces the display screen 20. The reinforcement body 80 is disposed close to a back cover 34. Both the first conductive support leg 411 and the second conductive support leg 421 are closer to the display screen 20 and farther away from the back cover 34 than the reinforcement body 80.

In some examples, FIG. 22 schematically shows a partial structure of the electronic device 10. As shown in FIG. 22, in the thickness direction Z of the middle frame 40, an orthographic projection of the reinforcement body 80 may be rectangular, for example, may be square. A shape of the reinforcement body 80 is relatively regular. This helps reduce processing difficulty. The reinforcement body 80 is connected to the first conductive support leg 411 through the conductive connector 400.

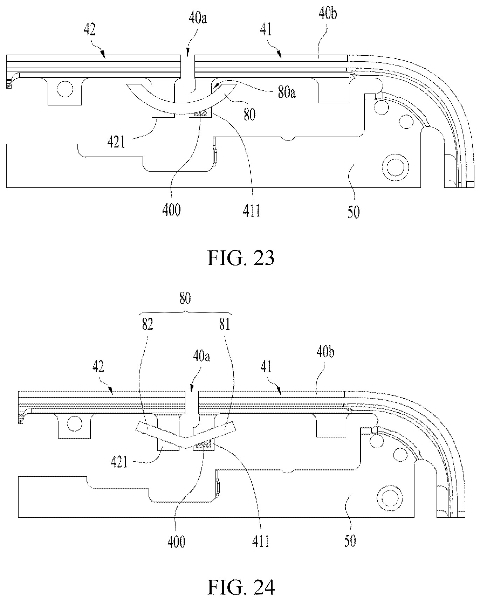

In some examples, FIG. 23 schematically shows a partial structure of the electronic device 10. As shown in FIG. 23, the reinforcement body 80 includes a first recess 80a. The first recess 80a faces the antenna gap 40a. The reinforcement body 80 may be arc-shaped. A surface of the arc-shaped reinforcement body 80 is smooth and flat, has a regular shape, and is easy to be processed and manufactured. In addition, when bearing stress, the reinforcement body 80 has good force balance. For example, the reinforcement body 80 may be circular-arc-shaped. Alternatively, FIG. 24 schematically shows a partial structure of the electronic device 10. As shown in FIG. 24, the reinforcement body 80 includes a first reinforcement section 81 and a second reinforcement section 82 that are disposed in an intersecting manner. The first reinforcement section 81 and the second reinforcement section 82 are separately embedded in the insulating filler 90 at different angles, to help increase connection strength between the insulating filler 90 and the reinforcement body 80 and improve a bonding force between the insulating filler 90 and the reinforcement body 80. Both the first reinforcement section 81 and the second reinforcement section 82 may be flat sections, so that the reinforcement body 80 is in a "V" shape as a whole. The first reinforcement section 81 is connected to the first conductive support leg 411 through the conductive connector 400.

In some examples, an opening of the first recess 80a may be disposed in a manner of facing away from the antenna gap 40a. The reinforcement body 80 may be arc-shaped. Alternatively, the reinforcement body 80 includes the first reinforcement section 81 and the second reinforcement section 82 that are disposed in an intersecting manner.

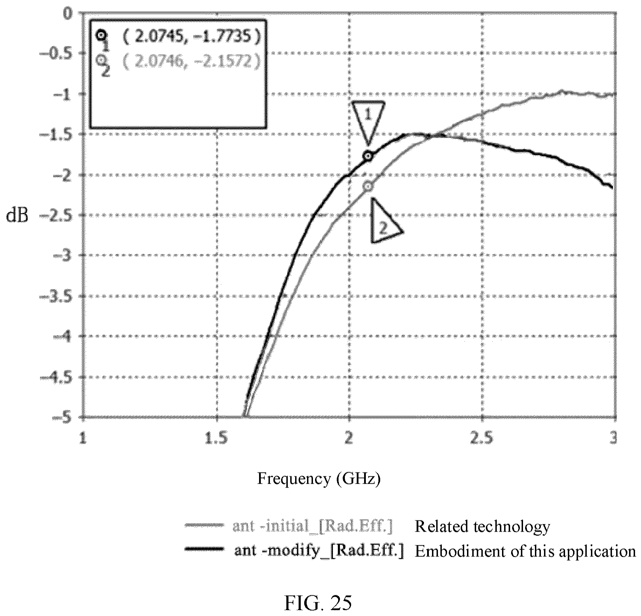

FIG. 25 is a diagram of radiation efficiency comparison simulation of an antenna in a related technology and an antenna according to an embodiment of this application. The antenna is a left-handed antenna. The first radiator 41 is a main stub, and the second radiator 42 is a parasitic stub. In this embodiment of this application, both the first conductive support leg 411 and the second conductive support leg 421 are disposed on one side that is of the reinforcement body 80 and that faces the display screen 20, and in a manner in which the reinforcement body 80 is electrically connected to the first conductive support leg 411, radiation efficiency of a medium-high frequency can be improved by 0.4 dB. Therefore, a manner of disposing the reinforcement body 80, the first conductive support leg 411, and the second conductive support leg 421 may also help improve structural strength at the antenna gap 40a, and help improve antenna performance.

In some examples, in the thickness direction Z of the middle frame 40, an orthographic projection of the at least one of the first conductive support leg 411 and the second conductive support leg 421 has an overlapping region with the orthographic projection of the reinforcement body 80. In the thickness direction Z of the middle frame 40, the reinforcement body 80 may fully use space on one side of the at least one of the first conductive support leg 41 and the second conductive support leg 42, so that a structure design of the reinforcement body 80, the first conductive support leg 41, and the second conductive support leg 42 is compact. This helps reduce a space occupancy rate of the reinforcement body 80, the first conductive support leg 41, and the second conductive support leg 42.

For example, in an embodiment in which an orthographic projection of the first conductive support leg 411 has an overlapping region with the orthographic projection of the reinforcement body 80, the first conductive support leg 411 is located between the reinforcement body 80 and the display screen 20. In an embodiment in which an orthographic projection of the second conductive support leg 421 has an overlapping region with the orthographic projection of the reinforcement body 80, the second conductive support leg 421 is located between the reinforcement body 80 and the display screen 20. In an embodiment in which the orthographic projection of the first conductive support leg 411 and the orthographic projection of the second conductive support leg 421 each have an overlapping region with the orthographic projection of the reinforcement body 80, both the first conductive support leg 411 and the second conductive support leg 421 are located between the reinforcement body 80 and the display screen 20.

In some implementable manners, the first conductive support leg 411 is connected to the reinforcement body 80 through the conductive connector 400. The reinforcement body 80, the conductive connector 400, and the first conductive support leg 411 are of an integrally formed structure.

In some implementable manners, the second conductive support leg 421 is connected to the reinforcement body 80 through the conductive connector 400. The reinforcement body 80, the conductive connector 400, and the second conductive support leg 421 are of an integrally formed structure.

In some implementable manners, the conductive connector 400 is a solder bump. One of the first conductive support leg 411 and the second conductive support leg 421 is soldered to the reinforcement body 80.

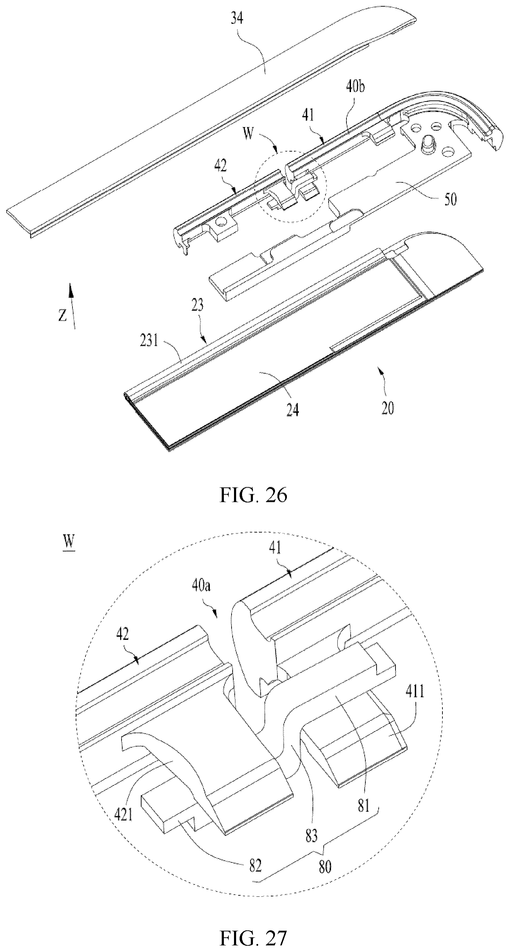

FIG. 26 schematically shows a partially exploded structure of an electronic device 10. FIG. 27 is an enlarged view of a position W in FIG. 26. As shown in FIG. 26 and FIG. 27, an embodiment of this application further provides an electronic device 10. For structures in the electronic device 10 in this embodiment that are the same as those in the foregoing electronic device 10, details are not described herein again. In the electronic device 10 in this embodiment, a reinforcement body 80 is located between a display screen 20 and a back cover 34. The reinforcement body 80 is disposed opposite to an antenna gap 40a. The reinforcement body 80 is spaced from a bezel 40b, and the reinforcement body 80 is insulated from the bezel 40b. Both a first conductive support leg 411 and a second conductive support leg 421 are spaced from the reinforcement body 80. In addition, both the first conductive support leg 411 and the second conductive support leg 421 are insulated from the reinforcement body 80. In a thickness direction Z of a middle frame 40, one of the first conductive support leg 411 and the second conductive support leg 421 is located on one side that is of the reinforcement body 80 and that faces away from the display screen 20, and the other one of the first conductive support leg 411 and the second conductive support leg 421 is located on one side that is of the reinforcement body 80 and that faces the display screen 20. An orthographic projection of the at least one of the first conductive support leg 411 and the second conductive support leg 421 has an overlapping region with an orthographic projection of the reinforcement body 80.

In some examples, the reinforcement body 80 includes a first reinforcement section 81, a second reinforcement section 82, and a third reinforcement section 83. The first reinforcement section 81 is connected to one end of the third reinforcement section 83, and the second reinforcement section 82 is connected to the other end of the third reinforcement section 83.

For example, the first conductive support leg 411 is located on one side that is of the first reinforcement section 81 and that faces the display screen 20. The second conductive support leg 421 is located on one side that is of the second reinforcement section 82 and that faces away from the display screen 20. The third reinforcement section 83 passes between the first conductive support leg 411 and the second conductive support leg 421. Alternatively, in some other examples, the first conductive support leg 411 may be located on one side that is of the first reinforcement section 81 and that faces away from the display screen 20. The second conductive support leg 421 may be located on one side that is of the second reinforcement section 82 and that faces the display screen 20.

For example, the first reinforcement section 81 and the third reinforcement section 83 are disposed in an intersecting manner. For example, an included angle between the first reinforcement section 81 and the third reinforcement section 83 may be greater than or equal to 90 degrees.

For example, the second reinforcement section 82 and the third reinforcement section 83 are disposed in an intersecting manner. For example, an included angle between the second reinforcement section 82 and the third reinforcement section 83 may be greater than or equal to 90 degrees.

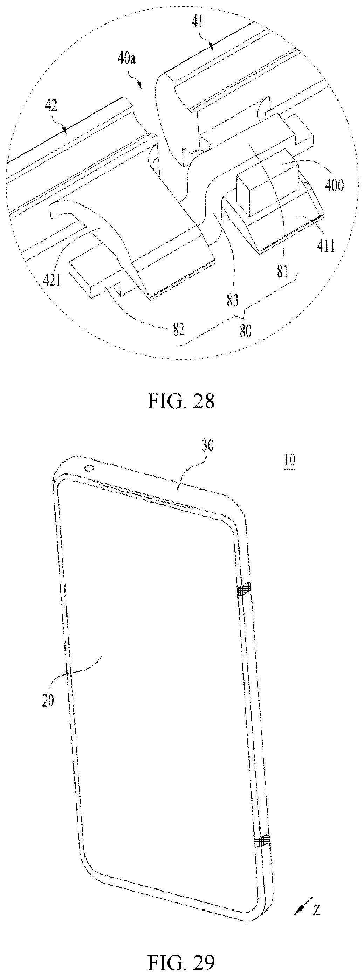

In some examples, FIG. 28 schematically shows a partially exploded structure of the electronic device 10. As shown in FIG. 28, the first conductive support leg 411 is electrically connected to the first reinforcement section 81. For example, the reinforcement body 80 is a conductor. The electronic device 10 further includes a conductive connector 400. The first conductive support leg 411 is connected to the first reinforcement section 81 through the conductive connector 400. For example, a first radiator 41 may be a main stub, and a second radiator 42 may be a parasitic stub.

For a manner in which the reinforcement body 80 is electrically connected to the first conductive support leg 411, the reinforcement body 80 helps enhance gap coupling strength between the first radiator 41 and the second radiator 42, to improve coupling electric field strength between the first radiator 41 and the second radiator 42, so as to help improve antenna performance. In addition, the reinforcement body 80 is connected to the first conductive support leg 411. This helps improve connection strength and connection stability between the reinforcement body 80 and the first radiator 41, to help improve structural strength of a combination formed by the reinforcement body 80, an insulating filler 90, and the bezel 40b.

For example, the first conductive support leg 411 is connected to the first reinforcement section 81 through the conductive connector 400. The reinforcement body 80, the conductive connector 400, and the first conductive support leg 411 are of an integrally formed structure.

For example, the conductive connector 400 is a solder bump. The first conductive support leg 411 is soldered to the first reinforcement section 81.

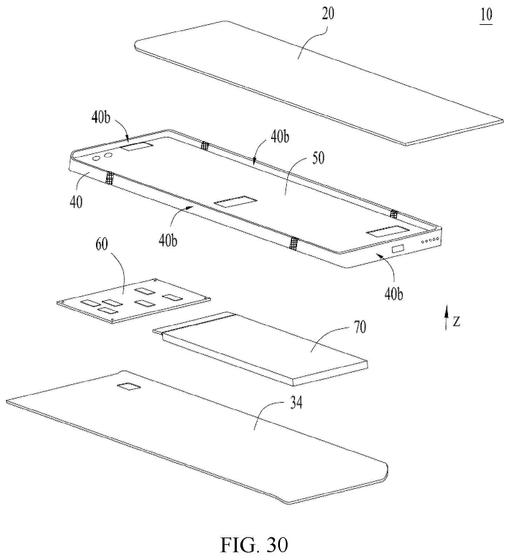

In some implementable manners, FIG. 29 schematically shows a structure of the electronic device 10. FIG. 30 schematically shows a partially exploded structure of the electronic device 10. As shown in FIG. 29 and FIG. 30, in this embodiment of this application, the electronic device 10 may be a mobile phone with a flat screen. The technical solutions in this embodiment of this application are also applicable to the mobile phone with the flat screen. A housing 30 includes the middle frame 40 and the back cover 34. The middle frame 40 may be of an annular structure. For example, the middle frame 40 may be of a rectangular annular structure. The middle frame 40 includes four bezels 40b: a left bezel, a top bezel, a right bezel, and a bottom bezel. For example, the antenna gap 40a may be provided on at least one of the left bezel and the right bezel. The first radiator 41 and the second radiator 42 are respectively disposed on two sides of the antenna gap 40a.

In descriptions of embodiments of this application, it should be noted that, unless otherwise explicitly specified and defined, the terms "mounting", "connection to", and "connection" should be understood in a broad sense, for example, may be a fixed connection, an indirect connection through an intermediate medium, or an internal connection between two elements or an interactive relationship between two elements. For a person of ordinary skill in the art, specific meanings of the foregoing terms in embodiments of this application may be understood based on a specific situation.

In embodiments of this application, the terms do not indicate or imply that the indicated apparatus or element needs to have a specific orientation or needs to be constructed and operated in a specific orientation. Therefore, the terms should not be construed as a limitation on embodiments of this application. In the descriptions of embodiments of this application, unless otherwise exactly and specifically specified, "a plurality of" means two or at least two.

In the specification, claims, and accompanying drawings of this application, terms "first", "second", "third", "fourth", and the like (if existent) are intended to distinguish between similar objects but do not necessarily indicate a specific order or sequence. It should be understood that data used in such a way is interchangeable in a proper situation, so that embodiments of this application described herein can be implemented in other orders than the order illustrated or described herein. In addition, the terms "include", "have", and any other variants thereof are intended to cover a non-exclusive inclusion. For example, a process, method, system, product, or device that includes a list of steps or units is not necessarily limited to those steps or units that are clearly listed, but may include other steps or units that are not clearly listed or are inherent to the process, method, system, product, or device.

The term "a plurality of" in this specification means two or at least two. The term "and/or" in this specification describes only an association relationship for describing associated objects and indicates that three relationships may exist. For example, A and/or B may indicate the following three cases: Only A exists, both A and B exist, and only B exists. In addition, the character "/" in this specification generally indicates an "or" relationship between the associated objects; and in formulas, the character "/" indicates a "division" relationship between the associated objects.

It may be understood that various numbers in embodiments of this application are merely used for differentiation for ease of description, and are not used to limit the scope of embodiments of this application. It may be understood that sequence numbers of the foregoing processes do not mean execution sequences in embodiments of this application. The execution sequences of the processes should be determined based on functions and internal logic of the processes, and should not be construed as any limitation on the implementation processes of embodiments of this application.

## Claims

1. An electronic device, comprising:
a middle frame, wherein the middle frame comprises at least one bezel, the bezel comprises a first radiator and a second radiator, adjacent end portions of the first radiator and the second radiator are spaced apart to form an antenna gap, the first radiator comprises a first conductive support leg, and the second radiator comprises a second conductive support leg;
a display screen and a back cover, disposed on two opposite sides of the middle frame in a thickness direction of the middle frame; and
a reinforcement body, located between the display screen and the back cover, wherein both the first conductive support leg and the second conductive support leg are spaced from the reinforcement body and are disposed opposite to the antenna gap, wherein
in the thickness direction, at least one of the first conductive support leg and the second conductive support leg is located on one side that is of the reinforcement body and that faces away from the display screen.

2. The electronic device according to claim 1, wherein, in the thickness direction, both the first conductive support leg and the second conductive support leg are located on one side that is of the reinforcement body and that faces away from the display screen.

3. The electronic device according to claim 2, wherein, in the thickness direction, an orthographic projection of the at least one of the first conductive support leg and the second conductive support leg has an overlapping region with an orthographic projection of the reinforcement body.

4. The electronic device according to claim 3, wherein, in the thickness direction, an orthographic projection of the first conductive support leg and an orthographic projection of the second conductive support leg each have an overlapping region with the orthographic projection of the reinforcement body.

5. The electronic device according to claim 2, wherein the at least one of the first conductive support leg and the second conductive support leg is provided with a profiled surface facing the back cover, a shape of the profiled surface is the same as a shape of an inner wall of the back cover, and there is a gap between the profiled surface and the inner wall.

6. The electronic device according to any one of claims 2 to 5, wherein the electronic device further comprises an insulating filler, the insulating filler connects the reinforcement body and the bezel, the display screen comprises a flexible connection circuit board with a bending portion, the flexible connection circuit board is located on one side that is of the reinforcement body and that is away from the back cover, a surface that is of the insulating filler and that faces the flexible connection circuit board is provided with an avoidance recess, and the avoidance recess is configured to avoid the bending portion.

7. The electronic device according to claim 6, wherein the reinforcement body is embedded in the insulating filler, and at least a part of a surface that is of the reinforcement body and that faces the flexible connection circuit board forms a bottom wall of the avoidance recess.

8. The electronic device according to any one of claims 2 to 7, wherein a distance between the reinforcement body and the first conductive support leg is 0.5 millimeters or more; or a distance between the reinforcement body and the second conductive support leg is 0.5 millimeters or more.

9. The electronic device according to claim 2, wherein the electronic device further comprises a conductive connector, and one of the first conductive support leg and the second conductive support leg is electrically connected to the reinforcement body through the conductive connector.

10. The electronic device according to claim 9, wherein the reinforcement body, the conductive connector, and one of the first conductive support leg and the second conductive support leg are of an integrally formed structure; or
the conductive connector is a solder bump, and one of the first conductive support leg and the second conductive support leg is soldered to the reinforcement body.

11. The electronic device according to claim 1, wherein, in the thickness direction, one of the first conductive support leg and the second conductive support leg is located on one side that is of the reinforcement body and that faces away from the display screen, and the other one of the first conductive support leg and the second conductive support leg is located on one side that is of the reinforcement body and that faces the display screen.

12. The electronic device according to any one of claims 1 to 11, wherein the reinforcement body is spaced from the middle frame.

13. An electronic device, comprising:
a middle frame, wherein the middle frame comprises at least one bezel, the bezel comprises a first radiator and a second radiator, adjacent end portions of the first radiator and the second radiator are spaced apart to form an antenna gap, the first radiator comprises a first conductive support leg, and the second radiator comprises a second conductive support leg;
a display screen and a back cover, disposed on two opposite sides of the middle frame in a thickness direction of the middle frame;
a reinforcement body, located between the display screen and the back cover, wherein both the first conductive support leg and the second conductive support leg are spaced from the reinforcement body and are disposed opposite to the antenna gap; and
a conductive connector, wherein one of the first conductive support leg and the second conductive support leg is electrically connected to the reinforcement body through the conductive connector.

14. The electronic device according to claim 13, wherein, in the thickness direction of the middle frame, both the first conductive support leg and the second conductive support leg are located on one side that is of the reinforcement body and that faces the display screen.

15. The electronic device according to claim 13 or 14, wherein the reinforcement body, the conductive connector, and one of the first conductive support leg and the second conductive support leg are of an integrally formed structure; or
the conductive connector is a solder bump, and one of the first conductive support leg and the second conductive support leg is soldered to the reinforcement body.

16. The electronic device according to any one of claims 13 to 15, wherein, in the thickness direction of the middle frame, an orthographic projection of at least one of the first conductive support leg and the second conductive support leg has an overlapping region with an orthographic projection of the reinforcement body.

17. The electronic device according to any one of claims 1 to 16, wherein, in a length direction of the bezel, the first radiator is spaced from the second radiator.

18. The electronic device according to any one of claims 1 to 17, wherein, in the thickness direction, the orthographic projection of the reinforcement body is rectangular.

19. The electronic device according to any one of claims 1 to 17, wherein the electronic device further comprises an insulating filler, the insulating filler connects the reinforcement body and the bezel, the reinforcement body comprises a first recess, an opening of the first recess faces the antenna gap, or an opening of the first recess faces away from the antenna gap, the insulating filler covers the first recess, and the insulating filler has a first convex portion that matches a shape of the first recess.

20. The electronic device according to any one of claims 1 to 17, wherein the electronic device further comprises an insulating filler, the insulating filler connects the reinforcement body and the bezel, the reinforcement body comprises a first recess, an opening of the first recess faces the antenna gap, a bottom wall of the first recess is provided with a second recess, the insulating filler covers the first recess and the second recess, and the insulating filler has a first convex portion that matches a shape of the first recess and a second convex portion that matches a shape of the second recess.

21. The electronic device according to claim 20, wherein an inner wall of at least one of the first radiator and the second radiator is provided with a third recess, the insulating filler covers the third recess, and the insulating filler has a third convex portion that matches a shape of the third recess.

22. The electronic device according to any one of claims 19 to 21, wherein the reinforcement body is arc-shaped; or the reinforcement body comprises a first reinforcement section and a second reinforcement section that are disposed in an intersecting manner.

23. The electronic device according to any one of claims 1 to 22, wherein the electronic device further comprises a metal middle plate and a main board, in the thickness direction, both the metal middle plate and the main board are located between the display screen and the back cover, both the first radiator and the second radiator are electrically connected to the metal middle plate, the main board is disposed on the metal middle plate, the main board comprises a ground terminal, and the metal middle plate is electrically connected to the ground terminal.
